# EUROPÄISCHE PATENTSCHRIFT

(11) **EP 0 465 722 B1**
(45) Veröffentlichungstag und Bekanntmachung des Hinweises auf die Patenterteilung: **07.02.1996**
(21) Anmeldenummer: 90124035.8
(22) Anmeldetag: 13.12.1990
(51) Int. Cl.: C07F 7/18

(54) **Verfahren zur Verhinderung von Verfärbungen in Vinylacetoxysilanen**
Process for preventing discoloring of vinylacetoxysilanes
Procédé servant à empêcher la décoloration de vinylacétoxysilanes

(30) Priorität: 09.07.1990 DE 4021869
(43) Veröffentlichungstag der Anmeldung: 15.01.1992
(73) Patentinhaber: HÜLS AKTIENGESELLSCHAFT, D-45764 Marl (DE)
(72) Erfinder: Seiler, Claus-Dietrich, Dr., W-7888 Rheinfelden (DE); Rauleder, Hartwig, Dr., W-7888 Rheinfelden (DE); Frings, Albert, Dr., W-7888 Rheinfelden (DE); Kötzsch, Hans-Joachim, Dr., W-7888 Rheinfelden (DE)

(56) Entgegenhaltungen:
- WO-A-86/02088
- CHEMICAL ABSTRACTS Band 102, 27. Mai - 10. Juni 1985, Zusammenfassungsnr. 185268j, Columbus, Ohio, US; & JP - A - 6004194 (JPN. KOKAI TOKKYO KOHO) 10.01.1985

## Beschreibung

Gegenstand der vorliegenden Erfindung ist ein Verfahren zur Verhinderung von Verfärbungen in Vinylacetoxysilanen.

Vinylacetoxysilane haben vielseitige Anwendungen in der chemischen Industrie gefunden. So eignen sie sich als vernetzende Siliciumverbindungen bei der Herstellung von unter Ausschluß von Wasser lagerfähigen und bei Zutritt von Feuchtigkeit bei Raumtemperatur zu Elastomeren härtbaren Massen. Solche Massen werden durch Vermischen von kondensationsfähige Endgruppen enthaltenden Diorganopolysiloxanen und vernetzenden Siliciumverbindungen erhalten. Sie spielen auch eine wichtige Rolle als Zwischen- bzw. Vorprodukt bei der Herstellung von Verbindungen, deren destillative Reinigung aus Gründen thermischer Instabilität nicht unproblematisch ist, wie z. B. der Verbindung Vinyl-tris(butanonoximato)-silan.

Die Vinylacetoxysilan-Verbindungen sind auf unterschiedlichsten Wegen herstellbar. So können die Verbindungen durch Umsetzung der Vinylchlorsilane mit Essigsäureanhydrid hergestellt werden, wobei als Nebenprodukt Acetylchlorid entsteht. Auch durch Umsetzung der Vinylchlorsilane mit Essigsäure, vorwiegend in einem inerten Medium, werden Vinylacetoxysilane erhalten. Die Umsetzung von Vinylalkoxysilanen mit Essigsäureanhydrid führt ebenfalls zur Bildung von Vinylacetoxysilanen, wenngleich diese Verfahrensweise nicht die Wirtschaftlichkeit der vorher aufgeführten Synthesewege erreicht.

Die nach den dargelegten Verfahren erhaltenen Vinylacetoxysilan-Produkte besitzen einen gravierenden Nachteil, der darin besteht, daß die Destillate unterschiedlich schnell, d. h. nach Tagen bis wenigen Wochen nach ihrer Abfüllung, einen gelben bis tiefbraunen Farbton annehmen. Selbst Vinylacetoxysilane mit besonders hoher Reinheit, die durch wiederholte fraktionierende Destillation der Produkte erzielt werden, verfärben ebenso schnell wie die Produkte von nur technischer Qualität. Da der Einsatz verfärbter Vinylacetoxysilane im Hinblick auf nachteilige Auswirkungen in den Folgeprodukten nicht praktikabel ist, war eine langfristige Lagerhaltung für derartige Produkte bisher nicht möglich.

Es bestand deshalb die Aufgabe, Vinylacetoxysilane so herzustellen, daß die oft kurzfristig nach der Herstellung dieser Verbindungen einsetzende Verfärbung ausbleibt und dieser Zustand möglichst lange, d. h. über einen Zeitraum von mehr als einem Jahr, anhält.

In Erfüllung dieser Aufgabe wurde ein Verfahren zur Verhinderung von Verfärbungen in Vinylacetoxysilanen gefunden, das dadurch gekennzeichnet ist, daß man den vorgefertigten Vinylacetoxysilanen die Verbindungen
3,5-Ditertiärbutylbrenzcatechin und/oder
2,6-Ditertiärbutyl-4-methylphenol und/oder
2-Mercapto-benzimidazol
bei Temperaturen unter 70 °C in Mengen von 25 bis 500 ppm zumischt.

Auf diese Weise präparierte Vinylacetoxysilane verändern ihren Farbton auch über einen längeren Zeitraum aufgrund der Anwesenheit der obigen Verbindungen nicht. Gegenstand der vorliegenden Erfindung sind deshalb auch Vinylacetoxysilane, die gegen Verfärbung stabilisiert sind durch einen Gehalt an den Verbindungen
3,5-Ditertiärbutylbrenzcatechin und/oder
2,6-Ditertiärbutyl-4-methylphenol und/oder
2-Mercapto-benzimidazol
von 50 bis 250 ppm.

Die Verhinderung der Verfärbung der Vinylacetoxysilane wird im folgenden auch als Farbstabilisierung bezeichnet. Die Verbindungen bzw. Reaktionen, die zu den Verfärbungen in den Vinylacetoxysilanen führen, sind nicht bekannt. Auch wiederholtes Destillieren der Vinylverbindungen führt nicht Zu Destillaten bzw. Destillatfraktionen, die beim Stehenlassen frei von Verfärbungen bleiben. Ebenso gelingt es nicht, von Verfärbungen freibleibende Produkte herzustellen, indem man die Destillation der Vinylacetoxysilane in Gegenwart der erfindungsgemäßen Zusätze durchführt. Diese Produkte verfärben ebenso schnell wie die ohne Zusatz der erfindungsgemäßen Verbindungen erhaltenen Destillate. Die gewünschte Farbstabilität der Vinylacetoxysilane wird überraschenderweise ausschließlich dadurch herbeigeführt, daß die erfindungsgemäßen Zusätze den Destillaten unmittelbar nach deren Anfall zugegeben werden. Die Durchführung zusätzlicher Maßnahmen ist nicht erforderlich, sie können im Gegenteil den gewünschten Effekt wieder beseitigen.

Die durch den beanspruchten Zusatz erzielte Farbstabilisierung ist insofern überraschend, als bekannt ist, daß Acetoxysilane eine große Reaktionsfähigkeit gegenüber Sulfhydryl- und Hydroxyl-Gruppen besitzen, indem sie mit diesen unter Bildung von Essigsäure und den entsprechenden Siliciumverbindungen reagieren. Diese Reaktion tritt im vorliegenden Fall zurück, so daß die die Farbstabilisierung bewirkenden erfindungsgemäßen Zusätze nicht in ihr verbraucht werden, sondern zur Verhinderung der zur Produktverfärbung führenden Reaktion verfügbar bleiben.

Als Farbstabilisatoren im Sinne der vorliegenden Erfindung kommen die Verbindungen
3,5-Ditertiärbutylbrenzcatechin,
2,6-Ditertiärbutyl-4-methylphenol und
2-Mercapto-benzimidazol
in Frage.

Vinylacetoxysilane sind bei Raumtemperatur Flüssigkeiten. Es ist deshalb empfehlenswert, für die erfindungsgemäße Farbstabilisierung die zugesetzten Verbindungen, welche bei Raumtemperatur Feststoffe sind, den zu stabilisierenden Produkten in gelöster Form zuzusetzen. Als Lösungsmittel für die Zusätze wird die zu stabilisierende Verbindung selbst genommen. Die bevorzugte Verbindung zur Farbstabilisierung der Vinylacetoxysilane ist das 3,5-Ditertiärbutylbrenzcatechin.

Die jeweils anzuwendenden Mengen der einzelnen Verbindungen sind unterschiedlich und von Fall zu Fall zu ermitteln. Im allgemeinen reichen Mengen von 100 bis 250 ppm, bezogen auf das zu stabilisierende Vinylacetoxysilan, aus. Auch ein Zusatz von 25 ppm bewirkt bereits eine Farbstabilisierung. Bevorzugt wird ein Gehalt von 50 bis 250 ppm. Die Zugabe von Mengen über 500 ppm ist möglich, eine so große Zugabe bringt aber keine weitere Verbesserung der Farbstabilisierung. Auch Gemische der erfindungsgemäß zugesetzten Verbindungen können den zu stabilisierenden Vinylacetoxysilanen zugesetzt werden, vorausgesetzt, daß bei ihrer Anmischung keine Reaktionen untereinander stattfinden, die die Funktionsfähigkeit gegenüber dem Verfärbungsmechanismus beeinträchtigen.

Die Zugabe der erfindungsgemäßen Verbindungen kann bei Raumtemperatur erfolgen. Ein Erhitzen auf Temperaturen oberhalb 70 °C sollte nach Möglichkeit vermieden werden, da ab dieser Temperatur die vorgenannte Konkurrenzreaktion mit den Acetoxygruppen des Silans eintreten kann, die zu einer Verminderung der Wirksamkeit der eingesetzten Verbindungen führen kann.

### Vergleichsbeispiel A

In einen 4-Liter-Doppelmantelkolben, der mit einem Rückflußkühler, einem Rührer, einem Tropftrichter und einem Thermometer ausgestattet ist und mittels eines thermostatisierten Wärmekreislaufes beheizt wird, werden 1 292 g (8 mol) Vinyltrichlorsilan zusammen mit 700 ml Hexan vorgelegt. Die Mischung wird zum Sieden erhitzt und im Verlauf von 3 Stunden mit 1 500 g Essigsäure versetzt. Der entstehende Chlorwasserstoff wird laufend abgesaugt und das sich bildende Reaktionsgemisch so lange am Sieden gehalten, bis die Chlorwasserstoffentwicklung aufhört.

Das nach Entfernung des Chlorwasserstoffs im Kolben verbleibende Produkt wird in eine Destillationsanlage überführt und das Hexan unter Vakuum abdestilliert. Zur Entfernung des restlichen Chlors wird dem in der Destillationsblase enthaltenen Produkt eine dem Restchlorgehalt dieses Produkts äquivalente Menge an Natriumacetat (gelöst in wasserfreier Essigsäure) zugesetzt. Das ausgeschiedene Natriumchlorid wird abfiltriert und anschließend das erhaltene Filtrat unter Vakuum destillativ aufgearbeitet. Es wird ein Hauptlauf von 1 710 g Vinyltriacetoxysilan mit einem Reinheitsgehalt von 99,3 % erhalten. Das Produkt ist wasserklar.

100 cm³ des Destillates werden in einer Glasflasche, die in eine dunkle Folie gehüllt ist, untergebracht und täglich hinsichtlich einsetzender Verfärbung kontrolliert.

Nach 13 Tagen hatte das Produkt eine tiefgelbe Farbe angenommen.

### Vergleichsbeispiel B

Anteile der in Vergleichsbeispiel A erhaltenen Hauptlauffraktion werden abermals einer Vakuumdestillation unterworfen. Im Anschluß daran wird mit dem Destillat die in Vergleichsbeispiel A durchgeführte Untersuchung wiederholt.

Nach einer Standzeit von 15 Tagen hatte das Produkt eine tiefgelbe Färbung angenommen.

### Beispiel 1

Die gemäß Vergleichsbeispiel A erhaltene Hauptlauffraktion wird in mehrere Anteile aufgeteilt und jeweils einem Anteil eine solche Menge an
3,5-Ditertiärbutylbrenzcatechin und/oder
2,6-Ditertiärbutyl-4-methylphenol und/oder
2-Mercapto-benzimidazol
zugesetzt, daß Mischungen entstehen, die jeweils Gehalte der Verbindungen von 25, 50, 100, 250, 500 und 1 000 ppm besitzen.

Nach 18monatiger Lagerung wiesen die Mischungen noch keinerlei Farbveränderungen auf.

### Vergleichsbeispiel C

Die im Vergleichsbeispiel A durchgeführten Operationen werden analog wiederholt, jedoch unter Verwendung von Vinylmethyldichlorsilan anstelle von Vinyltrichlorsilan. Es wird ein Hauptlauf von 1 327 g Vinylmethyldiacetoxysilan mit einem Reinheitsgehalt von 99,1 % erhalten. Das Destillat ist wasserklar.

100 cm³ des Produktes werden in einer Glasflasche, die in eine dunkle Folie eingehüllt ist, untergebracht und täglich hinsichtlich einsetzender Verfärbung kontrolliert.

Nach 22 Tagen hatte der Flascheninhalt einen bräunlichen Farbton angenommen.

### Beispiel 2

Die gemäß Vergleichsbeispiel C erhaltene Hauptlauffraktion wird in mehrere Anteile aufgeteilt und jeweils einem Anteil eine solche Menge an
3,5-Ditertiärbutylbrenzcatechin und/oder
2,6-Ditertiärbutyl-4-methylphenol und/oder
2-Mercapto-benzimidazol
zugesetzt, daß Mischungen entstehen, die jeweils Gehalte der Verbindungen von 25, 50, 100, 250, 500 und 1 000 ppm besitzen.

Nach 12monatiger Lagerung wiesen die Mischungen noch keinerlei Farbänderungen auf.

## Patentansprüche

1. Verfahren zur Verhinderung von Verfärbungen in Vinylacetoxysilanen, dadurch gekennzeichnet, daß man den vorgefertigten Vinylacetoxysilanen die Verbindungen
3,5-Ditertiärbutylbrenzcatechin und/oder
2,6-Ditertiärbutyl-4-methylphenol und/oder
2-Mercapto-benzimidazol
bei Temperaturen unter 70 °C in Mengen von 25 bis 500 ppm zumischt.

2. Verfahren nach Anspruch 1, dadurch gekennzeichnet, daß man die Verbindungen
3,5-Ditertiärbutylbrenzcatechin und/oder
2,6-Ditertiärbutyl-4-methylphenol und/oder
2-Mercapto-benzimidazol
in Mengen von 50 bis 250 ppm zumischt.

3. Gegen Verfärbung stabilisiertes Vinyltriacetoxysilan, gekennzeichnet durch einen Gehalt von 50 bis 250 ppm an
3,5-Ditertiärbutylbrenzcatechin und/oder
2,6-Ditertiärbutyl-4-methylphenol und/oder
2-Mercapto-benzimidazol.

## Claims

1. A process for preventing discoloration in vinylacetoxysilanes, characterised in that previously prepared vinylacetoxysilanes are admixed with the compounds
3,5-di-tert.-butylpyrocatechol and/or
2,6-di-tert.-butyl-4-methylphenol and/or
2-mercaptobenzimidazole
in amounts of from 25 to 500 ppm at temperatures below 70°C.

2. A process according to claim 1, characterised in that the compounds
3,5-di-tert.-butylpyrocatechol and/or
2,6-di-tert.-butyl-4-methylphenol and/or
2-mercaptobenzimidazole
are admixed in amounts of from 50 to 250 ppm.

3. A vinyltriacetoxysilane stabilised against discoloration, characterised by a content of from 50 to 250 ppm of
3,5-di-tert.-butylpyrocatechol and/or
2,6-di-tert.-butyl-4-methylphenol and/or
2-mercaptobenzimidazole.

## Revendications

1. Procédé pour empêcher les changements de couleur des vinylacétoxysilanes,
caractérisé par le fait qu'on mélange aux vinylacétoxysilanes préparés au préalable, à des températures inférieures à 70°C et en des quantités de 25 à 500 ppm, les composés suivants :
3,5-di-tert-butyl-pyrocatéchol et/ou
2,6-di-tert-butyl-4-méthylphénol et/ou
2-mercaptobenzimidazole.

2. Procédé selon la revendication 1,
caractérisé par le fait qu'on mélange les composés
3,5-di-tert-butyl-pyrocatéchol et/ou
2,6-di-tert-butyl-4-méthylphénol et/ou
2-mercaptobenzimidazole
en des quantités de 50 à 250 ppm.

3. Vinyltriacétoxysilane stabilisé contre un changement de couleur,
caractérisé par le fait qu'il contient de 50 à 250 ppm des composés suivants :
3,5-di-tert-butyl-pyrocatéchol et/ou
2,6-di-tert-butyl-4-méthylphénol et/ou
2-mercaptobenzimidazole.
